(19) 

Europäisches
Patentamt
European
Patent Office
Office européen
des brevets

(11) **EP 4 679 628 A1**

(12) **EUROPEAN PATENT APPLICATION**
published in accordance with Art. 153(4) EPC

(43) Date of publication:
**14.01.2026 Bulletin 2026/03**

(21) Application number: **23929204.8**

(22) Date of filing: **28.03.2023**

(51) International Patent Classification (IPC):
***H01Q 1/38*** *(2006.01)*

(52) Cooperative Patent Classification (CPC):
**H01Q 1/38**

(86) International application number:
**PCT/CN2023/084517**

(87) International publication number:
**WO 2024/197605 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Yinwang Intelligent
Technologies Co., Ltd.
Shenzhen, Guangdong 518110 (CN)**

(72) Inventors:
* **GUAN, Yunjie
Shenzhen, Guangdong 518129 (CN)**
* **YANG, Xiaopan
Shenzhen, Guangdong 518129 (CN)**
* **LI, Haowei
Shenzhen, Guangdong 518129 (CN)**
* **GAO, Xiang
Shenzhen, Guangdong 518129 (CN)**

(74) Representative: **Maiwald GmbH
Engineering
Elisenhof
Elisenstrasse 3
80335 München (DE)**

(54) **ANTENNA STRUCTURE, ELECTRONIC DEVICE, AND TERMINAL**

(57)    Embodiments of this application provide an antenna structure, an electronic device, and a terminal, which may be used in intelligent driving, assisted driving, or autonomous driving. The antenna structure includes a first radiating structure and a second radiating structure that are connected to a same feeder line, the first radiating structure and the second radiating structure are mirror-symmetric, the first radiating structure includes a first microstrip and at least one first radiating element, the second radiating structure includes a second microstrip and at least one second radiating element, the at least one first radiating element is arranged along an extension direction of the first microstrip, and the at least one second radiating element is arranged along an extension direction of the second microstrip. A phase difference between a current of the first radiating structure and a current of the second radiating structure is controlled, so that the antenna structure may generate different radiation beams, to implement reconfigurable beam while meeting requirements of different functions.

FIG. 5

EP 4 679 628 A1

## Description

## TECHNICAL FIELD

This application relates to the field of sensor technologies, and in particular, to an antenna structure, an electronic device, and a terminal.

## BACKGROUND

With development of society, intelligent terminals such as intelligent transportation devices, smart home devices, and robots are gradually entering people's daily life. Sensors play an important role in the intelligent terminals. During movement of the intelligent terminal, various sensors such as a millimeter-wave radar, a lidar, a camera, and an ultrasonic radar installed on the intelligent terminal sense a surrounding environment, collect data, identify and track a moving object, identify a static scenario such as a lane line or a signboard, and perform route planning based on a navigator and map data. The sensors can detect a potential danger in advance, and assist in taking or even autonomously take a necessary avoidance measure, thereby effectively improving safety and comfort of the intelligent terminal.

For example, the intelligent terminal is an intelligent transportation device. Due to low costs and mature technologies, the millimeter-wave radar first becomes a main sensor in a self-driving system and an assisted driving system. Currently, an advanced driver assistance system (advanced driver assistance system, ADAS) includes more than 10 functions, and functions such as lane change assist (lance change assist, LCA), blind spot detection (blind spot detection, BSD), door open warning (door open warning, DOW), rear cross traffic alert (rear cross traffic alert, RCTA), and parking assist (parking assist, PA) all depend on the millimeter-wave radar. The foregoing different functions have different requirements for a radiation beam emitted by the millimeter-wave radar, which undoubtedly increases design complexity of an antenna of the millimeter-wave radar. Therefore, how to simplify an antenna design of the millimeter-wave radar while meeting the requirements of different functions has been a hot topic.

## SUMMARY

This application provides an antenna structure, an electronic device, and a terminal. The antenna structure is simple, and can generate a plurality of radiation beams in a form of a single-antenna structure, so that the antenna structure can be applicable to different functions.

A first aspect of this application provides an antenna structure, including a first radiating structure and a second radiating structure that are connected to a same feeder line. The first radiating structure and the second radiating structure are mirror-symmetric. The first radiating structure includes a first microstrip and at least one first radiating element. The second radiating structure includes a second microstrip and at least one second radiating element. The at least one first radiating element is arranged along an extension direction of the first microstrip, and the at least one second radiating element is arranged along an extension direction of the second microstrip.

The antenna structure in this embodiment of this application has the first radiating structure and the second radiating structure that are mirror-symmetric. A phase difference between a current of the first radiating structure and a current of the second radiating structure is controlled, so that the antenna structure may generate different radiation beams and switch between the different radiation beams. That is, the antenna structure can implement reconfigurable beam while meeting requirements of different functions. In addition, the antenna structure is simple and easy to implement.

In a possible implementation, the first microstrip and the second microstrip are disposed side by side and spaced apart along a first direction, and the extension direction of the first microstrip and the extension direction of the second microstrip are perpendicular to the first direction. A first side of the first microstrip is electrically connected to the at least one first radiating element, and the first side of the first microstrip faces away from the second microstrip along the first direction. A first side of the second microstrip is electrically connected to the at least one second radiating element, and the first side of the second microstrip faces away from the first microstrip along the first direction.

In the first direction, the first microstrip and the second microstrip may be disposed between the first radiating element and the second radiating element, so that a radiation aperture can be reduced and radiation performance is ensured, thereby facilitating miniaturization of the antenna structure.

In a possible implementation, the first microstrip and the second microstrip are disposed side by side and spaced apart along a first direction, and the extension direction of the first microstrip and the extension direction of the second microstrip are perpendicular to the first direction. A second side of the first microstrip is electrically connected to the at least one first radiating element, and the second side of the first microstrip faces the second microstrip along the first direction. A second side of the second microstrip is electrically connected to the at least one second radiating element, and the second side of the second microstrip faces the first microstrip along the first direction.

In this way, the antenna structure may generate different radiation beams, to implement reconfigurable beam, thereby meeting requirements of different functions.

In a possible implementation, when the phase difference between the current of the first radiating structure and the current of the second radiating structure is 0°, the antenna structure radiates a horizontal double-peak beam.

When the phase difference between the currents of the first radiating structure and the second radiating structure is 0°, the antenna structure may have two directions (directions to which maximum values of a radiation beam point) for radiating a signal, and may generate the horizontal double-peak beam. The two directions for radiating a signal of the antenna structure are respectively on two sides of a normal direction. Therefore, when the antenna structure is used in a millimeter-wave radar, the antenna structure may be used to detect a detected target on a left side of a vehicle body and a detected target behind the vehicle body, and may be used in a functional scenario such as BSD, LCA, DOW, or RCTA.

In a possible implementation, when a phase difference between a current of the first radiating structure and a current of the second radiating structure is N°, the antenna structure radiates a horizontal single-peak beam, where N is a positive integer.

When the phase difference between the currents of the first radiating structure and the second radiating structure is N°, the antenna structure may have one direction for radiating a signal, and may generate the horizontal single-peak beam. For example, when the phase difference between the current of the first radiating structure and the current of the second radiating structure is 180°, a direction for radiating a signal of the antenna structure is a normal direction. Therefore, the antenna structure may generate a normal single-peak beam. When the phase difference between the currents of the first radiating structure and the second radiating structure is 90°, the antenna structure may have a first radiation direction for radiating a signal, and the first radiation direction is on one side of the normal direction. Therefore, the antenna structure may generate a first horizontal single-peak beam. When the phase difference between the currents of the first radiating structure and the second radiating structure is 270°, the antenna structure may have a second radiation direction for radiating a signal, and the first radiation direction is on the other side of the normal direction. Therefore, the antenna structure may generate a second horizontal single-peak beam. Therefore, when the antenna structure generates the normal single-peak beam, the antenna structure may be used in a functional scenario such as PA. When the antenna structure generates the first horizontal single-peak beam or the second horizontal single-peak beam, the antenna structure may be used in a functional scenario such as RCTA.

In a possible implementation, a current on the at least one first radiating element and a current on the at least one second radiating element are symmetrical along a second direction.

According to this embodiment of this application, the current on the at least one first radiating element and the current on the at least one second radiating element are symmetrical along the second direction, so that a double-peak beam may be generated.

In a possible implementation, a current on the at least one first radiating element and a current on the at least one second radiating element are set with equal amplitudes and aligned in a same direction along the first direction.

According to this embodiment of this application, the current on the at least one first radiating element and the current on the at least one second radiating element are set with equal amplitudes and aligned in the same direction along the first direction, so that a normal single-peak beam may be generated.

In a possible implementation, a current on the at least one first radiating element and a current on the at least one second radiating element are set with non-with equal amplitudes and aligned in the same direction along the first direction.

According to this embodiment of this application, the current on the at least one first radiating element and the current on the at least one second radiating element are set with non-equal amplitudes and aligned in the same direction along the first direction, so that a horizontal single-peak beam, such as a first horizontal single-peak beam or a second horizontal single-peak beam, whose radiation direction is on one side of the normal direction may be generated.

In a possible implementation, the first radiating structure includes at least three first radiating elements, and the second radiating structure includes at least three second radiating elements. Widths of the at least three first radiating elements follow a rule of first being increased and then being decreased from a first end to a second end of the first microstrip, where the width of the first radiating element is a width of the first radiating element in the second direction, and the second direction is parallel to the extension direction of the first microstrip. Widths of the at least three second radiating elements follow a rule of first being increased and then being decreased from a first end to a second end of the second microstrip, where the width of the second radiating element is a width of the second radiating element in the second direction, and the second direction is parallel to the extension direction of the second microstrip.

In a possible implementation, the first radiating structure includes at least two first radiating elements, and the second radiating structure includes at least two second radiating elements. Each first radiating element has a same width in the second direction, and each second radiating element has a same width in the second direction.

In a possible implementation, the first radiating structure includes at least four first radiating elements, and the second radiating structure includes at least four second radiating elements. Spacings between two adjacent first radiating elements in the second direction follow a rule of first being decreased and then being increased from the first end to the second end of the first microstrip. Spacings between two adjacent second radiating elements in the second direction follow a rule of first being decreased and then being increased from the first end to the second end of the second microstrip.

In a possible implementation, the first radiating structure includes at least three first radiating elements, and the second radiating structure includes at least three second radiating elements. Spacings between two adjacent first radiating elements are the same in the second direction, and spacings between two adjacent second radiating elements are the same in the second direction.

In a possible implementation, a spacing d between the first microstrip and the second microstrip in the first direction satisfies $1/20\ \lambda \ll d \ll 1/2\ \lambda$, where $\lambda$ is an operating wavelength of the antenna structure.

In a possible implementation, the spacing d between the first microstrip and the second microstrip in the first direction is equal to $1/10\ \lambda$.

According to this embodiment of this application, the spacing between the first microstrip and the second microstrip in the first direction is adjusted, so that a length of the antenna structure in the first direction can be reduced, which helps miniaturize the antenna structure.

In a possible implementation, each first radiating element is a first patch element, and each second radiating element is a second patch element.

In a possible implementation, the first patch element and the second patch element are one of the following patches: a rectangular patch, a trapezoidal patch, a circular patch, an elliptical patch, a parallelogram patch, or a triangular patch.

In a possible implementation, there are four first radiating elements and four second radiating elements.

In a possible implementation, the first radiating structure and the second radiating structure are mirror-symmetric with respect to a symmetry axis parallel to the second direction, and the second direction is parallel to the extension direction of the first microstrip and the extension direction of the second microstrip.

A second aspect of this application provides an electronic device. The electronic device includes the antenna structure according to any one of the first aspect.

In a possible implementation, the electronic device is a radar.

A third aspect of this application provides a terminal. The terminal includes the electronic device according to any one of the second aspect, and the electronic device is a radar.

In a possible implementation, the terminal is a vehicle.

## BRIEF DESCRIPTION OF DRAWINGS

FIG. 1 is a functional block diagram of a vehicle according to an embodiment of this application;

FIG. 2 is a diagram of an application scenario according to an embodiment of this application;

FIG. 3 is a diagram of directions of a normal millimeter-wave radar and a corner millimeter-wave radar for radiating signals in a related technology;

FIG. 4 is a diagram of a structure of a series-fed patch antenna in a related technology;

FIG. 5 is a diagram of a structure of a first antenna structure according to an embodiment of this application;

FIG. 6 is a diagram of a structure of a first antenna structure connected to a feed network according to an embodiment of this application;

FIG. 7 is radiation patterns corresponding to the antenna structure shown in FIG. 5 in different phase differences;

FIG. 8 is a diagram of synthesizing radiation patterns according to an embodiment of this application;

FIG. 9 is a diagram of a structure of a second antenna structure according to an embodiment of this application;

FIG. 10 is a diagram of a structure of a third antenna structure according to an embodiment of this application;

FIG. 11 is a diagram of a first irregular-shaped patch element according to an embodiment of this application;

FIG. 12 is a diagram of a second irregular-shaped patch element according to an embodiment of this application;

FIG. 13 is a diagram of a return loss of the antenna structure in the embodiment shown in FIG. 5;

FIG. 14 is a diagram of current distribution of the antenna structure in the embodiment shown in FIG. 5 corresponding to a phase difference of 0°;

FIG. 15 is a 3D radiation pattern of the antenna structure in the embodiment shown in FIG. 5 corresponding to a phase difference of 0°;

FIG. 16 is a radiation pattern, on a horizontal plane, of the antenna structure in the embodiment shown in FIG. 5 corresponding to a phase difference of 0°;

FIG. 17 is a diagram of current distribution of the antenna structure in the embodiment shown in FIG. 5 corresponding to a phase difference of 180°;

FIG. 18 is a 3D radiation pattern of the antenna structure in the embodiment shown in FIG. 5 corresponding to a phase difference of 180°;

FIG. 19 is a radiation pattern, on a horizontal plane, of the antenna structure in the embodiment shown in FIG. 5 corresponding to a phase difference of 180°;

FIG. 20 is a diagram of current distribution of the antenna structure in the embodiment shown in FIG. 5 corresponding to a phase difference of 90°;

FIG. 21 is a 3D radiation pattern of the antenna structure in the embodiment shown in FIG. 5 corresponding to a phase difference of 90°;

FIG. 22 is a radiation pattern, on a horizontal plane, of the antenna structure in the embodiment shown in FIG. 5 corresponding to a phase difference of 90°;
FIG. 23 is a diagram of current distribution of the antenna structure in the embodiment shown in FIG. 5 corresponding to a phase difference of 270°;
FIG. 24 is a 3D radiation pattern of the antenna structure in the embodiment shown in FIG. 5 corresponding to a phase difference of 270°; and
FIG. 25 is a radiation pattern, on a horizontal plane, of the antenna structure in the embodiment shown in FIG. 5 corresponding to a phase difference of 270°.

Reference numerals:

100: vehicle;
200: antenna structure;
10: first radiating structure; 11: first microstrip; 12: first radiating element;
20: second radiating structure; 21: second microstrip; 22: second radiating element;
30: feeder line;
40: feed network.

## DESCRIPTION OF EMBODIMENTS

The following describes the technical solutions of this application with reference to the accompanying drawings.

It should be understood that, in this application, an "electrical connection" may be understood as physical contact and electrical conduction of components. It may also be understood as a form in which different components in a line structure are connected through physical lines that can transmit an electrical signal, such as a printed circuit board (printed circuit board, PCB) copper foil or a conducting wire.

The following describes some terms in embodiments of this application, to facilitate understanding of a person skilled in the art.

Patch element: The patch element is a module that has wireless receiving and transmitting functions in an antenna, for example, is clad copper disposed on a PCB.

Feeder line: The feeder line is also referred to as a cable, and has a function of transmitting an electrical signal.

Microstrip: The microstrip transmits an electromagnetic wave or a current wave carrying information from one point to another along a path specified by the microstrip. A material of the microstrip or the like is not specifically limited in this application. The microstrip herein may alternatively be a feeder line, and has a function of transmitting a signal and connecting a cable.

Antenna pattern: The antenna pattern is also referred to as radiation pattern and is configured to describe radiation effect of an antenna. The antenna pattern is a pattern in which relative field strength (a normalized modulus value) of an antenna radiation field varies with a direction at a specific distance from the antenna. The antenna pattern is generally indicated by two plane radiation patterns that are perpendicular to each other in a direction (a direction to which a maximum value of a radiation beam points) for radiating a signal of the antenna.

The antenna pattern usually includes a plurality of radiation beams. A radiation beam with highest radiation intensity is referred to as a main lobe, and the other radiation beams are referred to as minor lobes or side lobes. In the minor lobes, a minor lobe in an opposite direction of the main lobe is also referred to as a back lobe. In some antenna structures, radiation lobes, except the main lobe, whose strength (gain) is similar to that of the main lobe are formed due to in-phase superposition of field strength in other directions, which are referred to as grating lobes. In a radar, because the gain of the grating lobe is similar to that of the main lobe, it is difficult to determine whether a measurement target is in a radiation direction of the main lobe or a radiation direction of the grating lobe, so that the measurement target is easy to be confused, resulting in a location of the measurement target blurred.

Antenna return loss (S-parameters): The antenna return loss may be understood as a ratio of power of a signal reflected back to an antenna port through an antenna circuit to transmit power of the antenna port. A smaller reflected signal indicates a larger signal radiated by the antenna to space and higher radiation efficiency of the antenna. A larger reflected signal indicates a smaller signal radiated by the antenna to space and lower radiation efficiency of the antenna.

The antenna return loss may be represented by an S11 parameter, and S11 is one of the S-parameters. S11 indicates a reflection coefficient, and the parameter can represent transmit efficiency of the antenna. The S11 parameter is usually a negative number. A smaller S11 parameter indicates a smaller antenna return loss, less energy reflected back by the antenna, namely, more energy that actually enters the antenna, and higher system efficiency of the antenna. A larger S11 parameter indicates a larger antenna return loss and lower system efficiency of the antenna.

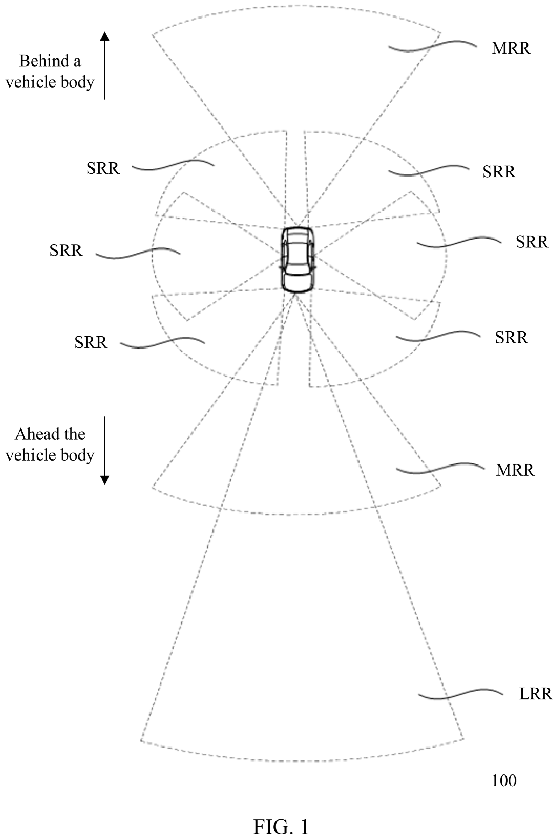

FIG. 1 is a diagram of a detection range of a vehicle 100 according to an embodiment of this application. A millimeter-wave radar operating in a millimeter-wave frequency band is less affected by bad weather such as fog, rain, snow, haze, and sand, and has characteristics of wide frequency band, small size, high spatial resolution, strong penetration, low costs, and the like. Therefore, the millimeter-wave radar may be used in a vehicle to implement functions such as automatic vehicle following, adaptive cruise, and emergency braking, as shown in FIG. 1.

In the millimeter-wave radar, a PCB-based microstrip antenna is the first choice for millimeter-wave radar due to advantages in low profile, low cost, easy processing and easy integration. Based on a detection range, the millimeter-wave radar can be classified into a long range radar (long range radar, LRR), a mid/medium range radar (mid/medium range radar, MRR), and a short range radar (short range radar, SRR).

c that of the SRR. For example, the detection range of the LRR may be greater than 200 meters, and the width of the angular domain may be $\pm15°$; the detection range of the MRR may be within 100 meters, and the width of the angular domain may be $\pm45°$; and the detection range of the SRR may be within 60 meters, and the width of the angular domain may be $\pm80°$. During use, different types of millimeter-wave radars may be installed at different locations of a vehicle body based on a function requirement of autonomous driving and a use condition of another sensor. A quantity and type of the millimeter-wave radar may be selected as required. For example, an LRR may be installed on the front of the vehicle body and serve as a forward radar; an MRR may be installed on the front or the rear of the vehicle body and serve as a forward radar or a backward radar; and an SRR may be installed on a side of the vehicle body or four corners of the vehicle body and serve as a side radar or a corner radar. In addition, the MRR may alternatively be installed on a side of the vehicle body or four corners of the vehicle body, and the SRR may alternatively be installed on the front or the rear of the vehicle body.

It should be understood that FIG. 1 shows several possible installation positions of the millimeter-wave radar, which are merely examples. During actual use, more or fewer millimeter-wave radars may be selected, and the type may also be adjusted.

The vehicle 100 may be a car, a truck, a motorcycle, a bus, a boat, a plane, a helicopter, a lawn mower, a recreational vehicle, an amusement park vehicle, a construction device, a tram, a golf cart, a train, a trolley, or the like. This is not specifically limited in this embodiment of this application.

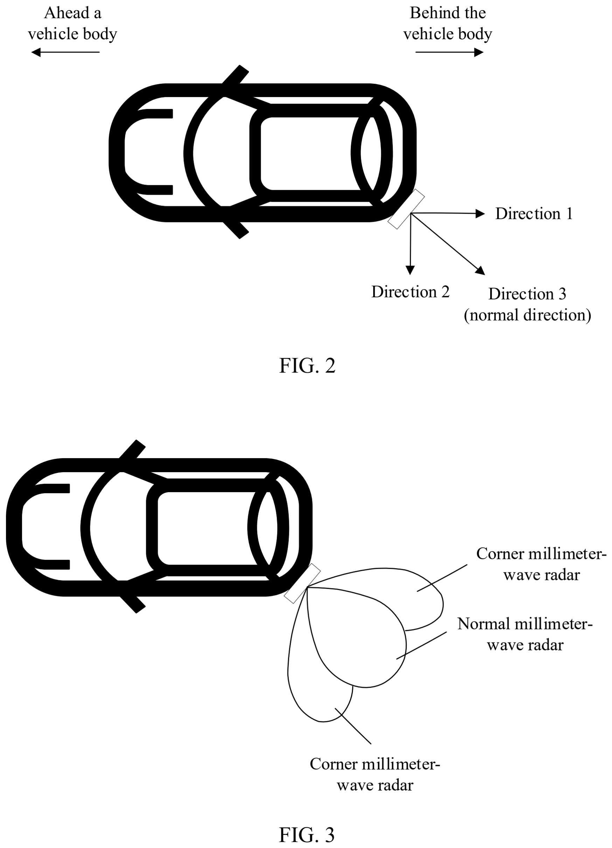

For corner radars installed at the four corners of the vehicle body (for example, a corner millimeter-wave radar disposed on a left rear side of the vehicle body), within a detection range of the corner radars, the corner radars may be used in different detection scenarios based on different detection angles, as shown in FIG. 2.

Scenario 1: When the detection angle of the corner radar includes a direction 1, the corner radar is configured to detect a detected target behind the vehicle body. For example, the corner radar may be used in a scenario such as a BSD, an LCA, or a DOW, and may be configured to remind a user whether there is a pedestrian or a vehicle in a blind area behind the vehicle, so as to remind the user whether an operation such as vehicle lane change or vehicle door opening can be performed.

Scenario 2: When the detection angle of the corner radar includes a direction 2, the corner radar is configured to detect a detected target on a left side of the vehicle body. For example, the corner radar may be used in an RCTA scenario. When the user performs parking, the corner radar may be configured to remind the user that there is a vehicle in the direction 2.

Scenario 3: When the detection angle of the corner radar includes a direction 3, the corner radar is configured to detect a detected target in a 45° rear-left direction of the vehicle body. For example, the corner radar may be used in a PA scenario. When the user performs parking, the corner radar may be used to remind the user a distance between the user and an obstacle in the direction 3.

It should be understood that, with improvement of performance (for example, accuracy of the detection angle) of the millimeter-wave radar, the millimeter-wave radar may provide a more accurate detection result for the user, to improve driving safety of the user. In addition, because millimeter-wave radars are disposed at the four corners of the vehicle body, there is usually 45° between the millimeter-wave radar and the rear of the vehicle body. In scenario 3, the millimeter-wave radar detects the 45° rear-left direction of the vehicle body, which is a normal direction (a direction perpendicular to a plane in which a radiator of an antenna in the radar is located) of the millimeter-wave radar.

For the foregoing different scenarios, it is required that the millimeter-wave radar emits different radiation beams, to cover a plurality of different directions at the same time. This undoubtedly increases design complexity of an antenna of the millimeter-wave radar. Therefore, how to simplify an antenna design of the millimeter-wave radar while meeting the requirements of different functions is a hot topic.

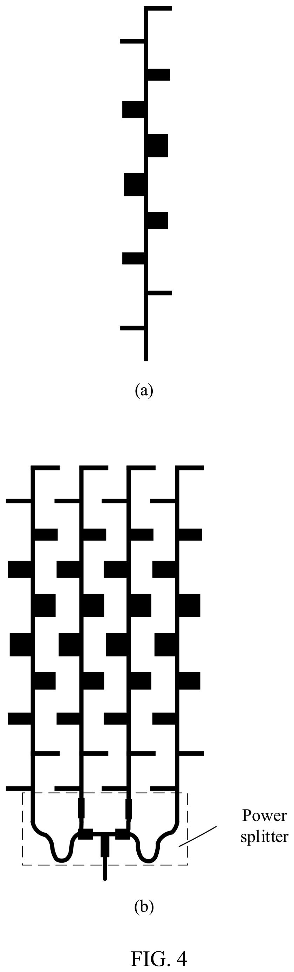

FIG. 3 is a diagram of directions of a normal millimeter-wave radar and a corner millimeter-wave radar for radiating signals in a related technology. FIG. 4 is a diagram of a structure of a series-fed patch antenna in a related technology. For a millimeter-wave radar, to implement coverage in the foregoing plurality of scenarios, in a related technology, a manner of combining the normal millimeter-wave radar (a direction for radiating a signal is a normal direction) and the corner millimeter-wave radar (directions for radiating a signal are on two sides of the normal direction, for example, form $\pm45°$ with the normal direction) is usually used, as shown in FIG. 3.

A common series-fed patch antenna is used in the normal millimeter-wave radar. As shown in (a) in FIG. 4, a direction to which a maximum value of a radiation beam of the normal millimeter-wave radar points is a normal direction (which is perpendicular to a plane on which the patch antenna is located). The corner millimeter-wave radar is most commonly implemented by using a combination of a multi-column series-fed patch antenna and a power splitter, as shown in (b) in FIG. 4. The corner millimeter-wave radar has maximum values of two radiation beams (two directions for radiating a signal are respectively on two sides of a normal direction).

Because the millimeter-wave radar implements coverage in the plurality of scenarios by jointly using the normal millimeter-wave radar and the corner millimeter-wave radar, there are two different antenna forms, and designs are complex. In addition, the corner millimeter-wave radar implements dual-peak beam through the multi-column series-fed patch antenna, and has a large size in a horizontal direction.

Embodiments of this application provide an antenna structure, an electronic device, and a terminal, which may be used in intelligent driving, assisted driving, or autonomous driving. The antenna structure includes a first radiating structure and a second radiating structure that are connected to a same feeder line. A phase difference between a current of the first radiating structure and a current of the second radiating structure is controlled, so that the antenna structure may generate a horizontal single-peak beam whose radiation direction is a normal direction, a horizontal single-peak beam located on one side of the normal direction, and horizontal dual-peak beams located on two sides of the normal direction. In other words, a same antenna structure may generate a plurality of radiation beams, to implement reconfigurable beam. Further, the antenna structure may be applicable to a vehicle-mounted millimeter-wave radar in a plurality of scenarios, and is simple and easy to implement.

It may be understood that the antenna structure provided in embodiments of this application may be used in a 77 GHz millimeter wave field or a 24 GHz millimeter wave field. For brevity of description, in this application, only an example in which the antenna structure is used in 77 GHz is used for description, and adjustment may be performed during actual application. This is not limited in this application. An application scenario of the antenna structure provided in embodiments is not limited in this application, and may be adjusted based on an actual requirement (for example, a requirement of a vehicle-mounted millimeter-wave radar or a roadside millimeter-wave radar).

The following describes, with reference to the accompanying drawings, an antenna structure, an electronic device, and a terminal that are provided in embodiments of this application.

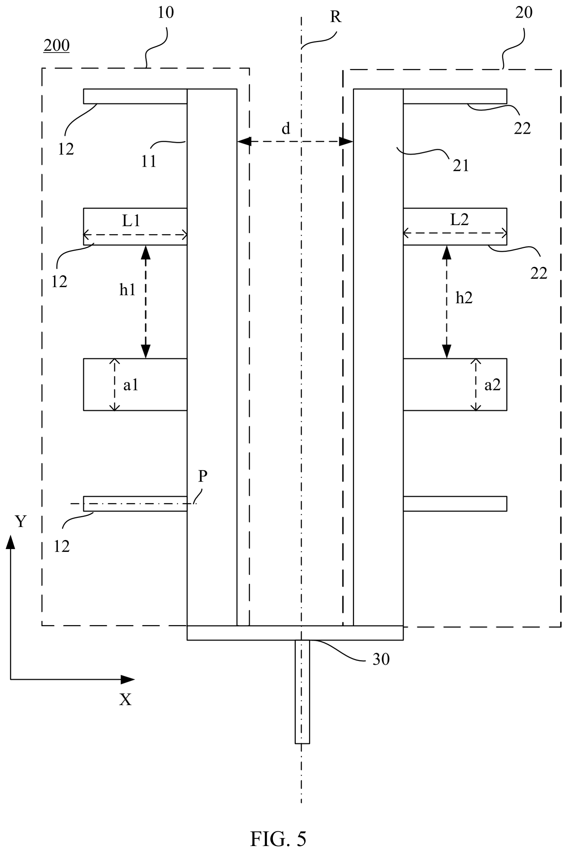

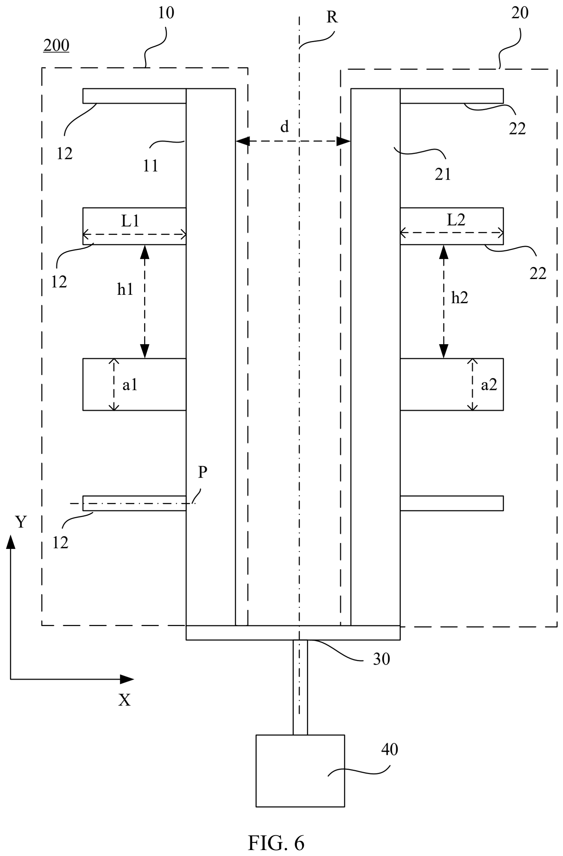

FIG. 5 is a diagram of a structure of a first antenna structure according to this application. FIG. 6 is a diagram of a structure of a first antenna structure connected to a feed network according to an embodiment of this application. Refer to FIG. 5. An antenna structure 200 in this embodiment of this application may include a first radiating structure 10 and a second radiating structure 20 that are connected to a same feeder line 30. The first radiating structure 10 and the second radiating structure 20 are mirror-symmetric. The first radiating structure 10 and the second radiating structure 20 may be mirror-symmetric with respect to a symmetry axis (for example, R in FIG. 5) parallel to a second direction (for example, a Y direction in FIG. 5). In addition, in this application, the first radiating structure 10 is located on a left side of the second radiating structure 20, and the first radiating structure 10 may alternatively be located on a right side of the second radiating structure.

It may be understood that a working principle of the antenna structure 200 may be considered as superposition of electromagnetic waves generated by the first radiating structure 10 and the second radiating structure 20 respectively. When a plurality of electromagnetic waves are transmitted to a same area, vector superposition occurs for the electromagnetic waves according to a superposition principle. Therefore, phases of currents on the first radiating structure 10 and the second radiating structure 20 are controlled, so that the electromagnetic waves generated by the first radiating structure 10 and the second radiating structure 20 respectively can be superposed to form a plurality of radiation beams, thereby implementing reconfigurable beam.

It may be understood that the first radiating structure 10 and the second radiating structure 20 may be connected to a feed network 40 (feed source) by using the same feeder line 30. The feed network 40 (for example, as shown in FIG. 6) feeds currents into the first radiating structure 10 and the second radiating structure 20 by using the same feeder line 30. The current may be, for example, a high-frequency current. It should be noted that the high-frequency current is specifically a current provided by an alternating current whose frequency is greater than or equal to 50 Hz. The current is transmitted in a form of an electromagnetic wave on a radiating element of the first radiating structure 10 or the second radiating structure 20. In addition, it may be understood that the same feeder line 30 connected to the first radiating structure 10 and the second radiating structure 20 may be a feeder line 30 of the antenna structure 200, or may be a feeder line 30 of the feed network 40. This is not specifically limited herein. In addition, in this embodiment of this application, a specific structure of the feeder line 30 is not limited herein.

Still refer to FIG. 5. In this embodiment of this application, the first radiating structure 10 may include a first microstrip 11 and at least one first radiating element 12. The second radiating structure 20 may include a second microstrip 21 and at least one second radiating element 22. The at least one first radiating element 12 is arranged along an extension direction of the first microstrip 11. The at least one second radiating element 22 is arranged along an extension direction of the second microstrip 21. The extension direction of the first microstrip 11 is parallel to the second direction (for example, the Y direction in FIG. 5), and the extension direction of the second microstrip 21 is parallel to the second direction.

It may be understood that, because the first radiating structure 10 and the second radiating structure 20 are mirror-symmetric, a quantity of first radiating elements 12 is the same as a quantity of second radiating elements 22. For example, as shown in FIG. 5, there are four first radiating elements 12 and four second radiating elements 22. The four first radiating elements 12 and the four second radiating elements 22 are in a one-to-one correspondence, and a first radiating element 12 and a second radiating element 22 that correspond to each other are mirror-symmetric.

Certainly, the quantity of first radiating elements 12 and the quantity of second radiating elements 22 each include but are not limited to four, for example, may alternatively be one, two, three, five, or the like. The quantity of first radiating elements 12 and the quantity of second radiating elements 22 may be adjusted as required, to adjust a radiation characteristic (for example, a detection angle or a detection range) of the antenna structure 200.

When there are a plurality of first radiating elements 12 and a plurality of second radiating elements 22, the plurality of first radiating elements 12 are spaced apart along the extension direction of the first microstrip 11, and the plurality of second radiating elements 22 are spaced apart along the extension direction of the second microstrip 21.

In this embodiment of this application, shapes of the first radiating element 12 and the second radiating element 22 are the same. For example, as shown in FIG. 5, both the first radiating element 12 and the second radiating element 22 are rectangular. In addition, when there are a plurality of first radiating elements 12 and a plurality of second radiating elements 22, the plurality of first radiating elements 12 and the plurality of second radiating elements 22 are of a same shape. Further, in this embodiment of this application, a length of the at least one first radiating element 12 in a first direction (for example, an X direction in FIG. 5) is the same as a length of the at least one second radiating element 22 in the first direction.

Because the first radiating structure 10 and the second radiating structure 20 are mirror-symmetric, the first microstrip 11 and the second microstrip 21 are mirror-symmetric with respect to the symmetry axis (for example, R in FIG. 5) parallel to the second direction. In addition, one end of the first microstrip 11 and one end of the second microstrip 21 are separately connected to one end of the feeder line 30, and the other end of the feeder line 30 is configured to connect to the feed network 40.

In conclusion, in this embodiment of this application, mirror symmetry means that: when the first radiating structure 10 and the second radiating structure 20 are symmetric with respect to the symmetry axis R, quantities, sizes, shapes, and the like of radiating elements of the first radiating structure 10 and the second radiating structure 20 are the same; arrangement rules of a plurality of radiating elements of the first radiating structure 10 and the second radiating structure 20 are the same when there are a plurality of radiating elements; and microstrips of the radiating elements of the first radiating structure 10 and the second radiating structure 20 are the same in sizes and shapes.

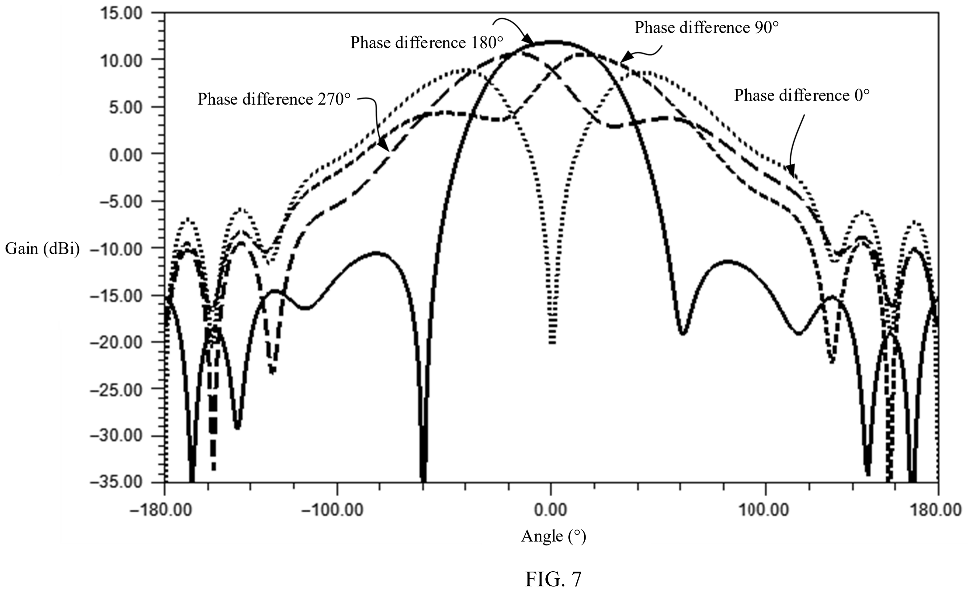

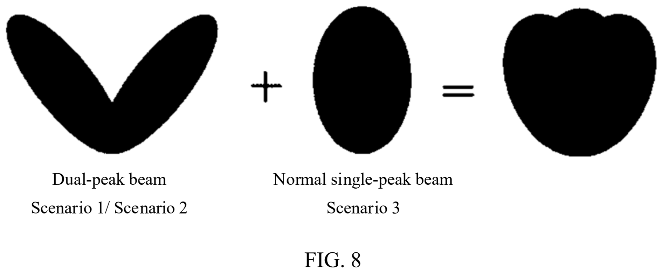

FIG. 7 is radiation patterns corresponding to the antenna structure shown in FIG. 5 in different phase differences. FIG. 8 is a diagram of synthesizing radiation patterns according to an embodiment of this application. Refer to FIG. 7. When a phase difference between a current of the first radiating structure 10 and a current of the second radiating structure 20 is 0°, the antenna structure 200 may have two directions (directions to which maximum values of a radiation beam point) for radiating a signal, and the antenna structure 200 may radiate a horizontal double-peak beam (as shown in FIG. 7). When the phase difference between the current of the first radiating structure 10 and the current of the second radiating structure 20 is N°, N is a positive integer. For example, N may include but is not limited to 90, 180, and 270. The antenna structure 200 may have one direction (for example, as shown in FIG. 7) for radiating a signal. The antenna structure 200 may radiate a horizontal single-peak beam, and may cover the scenario 2 and the scenario 3 (as shown in FIG. 8). It may be understood that the one direction for radiating a signal of the antenna structure 200 varies with a value of N. Therefore, in this embodiment of this application, the phase difference between the current of the first radiating structure 10 and the current of the second radiating structure 20 is controlled, so that the antenna structure 200 may generate different radiation beams (four radiation beams shown in FIG. 7), implement reconfigurable beam, and cover a plurality of scenarios shown in FIG. 8, thereby meeting requirements of different functions.

When a phase difference between the currents of the first radiating structure 10 and the second radiating structure 20 is 180°, a direction for radiating a signal of the antenna structure 200 is a third direction (for example, a direction pointed to by 0° in FIG. 7). The third direction is perpendicular to a direction of a plane in which the antenna structure 200 is located, and is used as a normal direction of the antenna structure 200. Therefore, when the phase difference between the currents of the first radiating structure 10 and the second radiating structure 20 is 180°, the antenna structure 200 may generate a normal single-peak beam. When millimeter-wave radars with the antenna structure 200 provided in this embodiment of this application are disposed at four corners of a vehicle body of a vehicle 100 and are used as corner radars, detection angles of the millimeter-wave radars include the direction 3 shown in FIG. 2, and the millimeter-wave radar may be used to detect a detected target in a 45° rear-left direction of the vehicle body. The millimeter-wave radar may be used in the foregoing scenario 3 (as shown in FIG. 8), for example, used in a functional scenario such as PA.

When a phase difference between the currents of the first radiating structure 10 and the second radiating structure 20 is 90°, a direction for radiating a signal of the antenna structure 200 is a fourth direction (a direction pointed to by 17° in FIG. 7). The fourth direction is on one side (a right side in FIG. 7) of the third direction (the normal direction), so that a first horizontal single-peak beam may be formed. When millimeter-wave radars with the antenna structure 200 provided in this embodiment of this application are disposed at four corners of a vehicle body of a vehicle 100 and are used as corner radars, detection angles of the millimeter-wave radars include the direction 1 shown in FIG. 2, and the millimeter-wave radar may be used to detect a detected target in a rear direction of the vehicle body. The millimeter-wave radar may be used in the foregoing scenario 1 (as shown in FIG. 8), for example, may be used in a scenario such as BSD, LCA, or DOW.

When a phase difference between the currents of the first radiating structure 10 and the second radiating structure 20 is 270°, a direction for radiating a signal of the antenna structure 200 is a fifth direction (a direction pointed to by -17° in FIG. 7). The fifth direction is on the other side (a left side in FIG. 7) of the third direction (the normal direction), so that a second horizontal single-peak beam may be formed. When millimeter-wave radars with the antenna structure 200 provided in this embodiment of this application are disposed at four corners of a vehicle body of a vehicle 100 and are used as corner radars, detection angles of the millimeter-wave radars include the direction 2 shown in FIG. 2, and the millimeter-wave radar may be used to detect a detected target on a left side of the vehicle body. The millimeter-wave radar may be used in the foregoing scenario 2 (as shown in FIG. 8), for example, may be used in a scenario such as RCTA. In addition, because a difference between the phase difference 90° and the phase difference 270° is 180°, radiation directions of the first horizontal single-peak beam and the second horizontal single-peak beam are symmetrical about the normal direction. Therefore, the first horizontal single-peak beam and the second horizontal single-peak beam may be referred to as complementary single-peak beams.

When a phase difference between the currents of the first radiating structure 10 and the second radiating structure 20 is 0°, two directions (a sixth direction and a seventh direction, for example, directions pointed to by ±45° in FIG. 7) for radiating a signal of the antenna structure 200 are respectively on two sides of the third direction (the normal direction), and a horizontal double-peak beam may be generated. When millimeter-wave radars with the antenna structure 200 provided in this embodiment of this application are disposed at four corners of a vehicle body of a vehicle 100 and are used as corner radars, detection angles of the millimeter-wave radars include the direction 1 and the direction 2 shown in FIG. 2, and the millimeter-wave radars may be respectively used to detect a detected target on a left side of the vehicle body and a detected target behind the vehicle body. The millimeter-wave radar may be used in the foregoing scenario 1 and scenario 2 (as shown in FIG. 8), for example, may be used in a functional scenario such as BSD, LCA, DOW, or RCTA. The third direction, the fourth direction, the fifth direction, the sixth direction, and the seventh direction may be in a same plane, and the plane may be defined as a horizontal plane (for example, the horizontal plane may be a plane formed by the first direction and the third direction), to implement detection at different angles in the same plane.

Therefore, different phases are configured for the antenna structure 200 provided in this embodiment of this application, so that the antenna structure 200 can generate beams such as a normal single-peak beam, a horizontal dual-peak beam, a first horizontal single-peak beam, and a second horizontal single-peak beam, to implement coverage in the plurality of scenarios shown in FIG. 8. A horizontal single-peak beam such as a normal single-peak beam, a first horizontal single-peak beam, or a second horizontal single-peak beam may be understood as a single radiation beam that is of the antenna structure 200 for radiating a signal in a plane formed by the first direction and the third direction. A horizontal dual-peak beam may be understood as two radiation beam that is of the antenna structure 200 for radiating a signal in the plane formed by the first direction and the third direction.

In this embodiment of this application, a specific manner of controlling the phase difference between the current on the first radiating structure 10 and the current on the second radiating structure 20 is not particularly limited in this embodiment of this application. For example, phase configuration may be performed on the antenna structure 200 by using a delay line or a chip, to implement reconfigurable beam.

In this embodiment of this application, a specific structure of the delay line is not limited. For example, when the phase difference is 0°, 90°, 180°, or 270°, a length of each section of the delay line may be an integer multiple of a quarter of an operating wavelength, because the quarter of the wavelength corresponds to the phase difference of 90°. Alternatively, in some embodiments, there are a plurality of parallel transmission sections inside a delay line, each transmission section includes one switch, and each transmission section corresponds to one phase. For example, a phase difference corresponding to two adjacent transmission sections is 90 degrees. Therefore, when it is required that the phase difference between the current on the first radiating structure 10 and the current on the second radiating structure 20 is 270°, a switch of a transmission section corresponding to 270° in the delay line may be controlled to be turned on, and a switch of a remaining transmission section may be turned off.

In a manner of controlling the phase difference by using a chip, an output end of the chip may be used as a feed source connected to the feeder line 30, so that a phase of a current fed into at least one of the first radiating structure 10 and the second radiating structure 20 may be changed based on a required phase difference.

It may be understood that, when the phase difference between the currents of the first radiating structure 10 and the second radiating structure 20 is adjusted, a phase of a current on at least one of the first radiating structure 10 and the second radiating structure 20 may be adjusted. For example, in some embodiments, only a phase of a current on the first radiating structure 10 or the second radiating structure 20 is adjusted. In other words, a single radiating structure in the first radiating structure 10 and the second radiating structure 20 works independently. Alternatively, in some embodiments, a phase of the current on the first radiating structure 10 and a phase of the current on the second radiating structure 20 may be separately adjusted. In other words, the first radiating structure 10 and the second radiating structure 20 may work independently at the same time.

In some possible implementations, still refer to FIG. 5. The first microstrip 11 and the second microstrip 21 may be disposed side by side and spaced apart along the first direction (for example, the X direction in FIG. 5). The extension direction of the first microstrip 11 and the extension direction of the second microstrip 21 are perpendicular to the first direction. In other words, the first direction is perpendicular to the second direction. A first side of the first microstrip 11 is electrically connected to the at least one first radiating element 12. For example, the four first radiating elements 12 in FIG. 5 are electrically connected to the first side of the first microstrip 11, and the first side of the first microstrip 11 faces away from the second microstrip 21 along the first direction. A first side of the second microstrip 21 is electrically connected to the at least one second radiating element 22. For example, the four second radiating elements 22 in FIG. 5 are electrically connected to the first side of the second microstrip 21, and the first side of the second microstrip 21 faces away from the first microstrip 11 along the first direction. In this way, in the first direction, the first microstrip 11 and the second microstrip 21 may be disposed between the at least one first radiating element 12 and the at least one second radiating element 22, so that a radiation aperture can be reduced and radiation performance is ensured, thereby facilitating miniaturization of the antenna structure 200 and facilitating antenna integration.

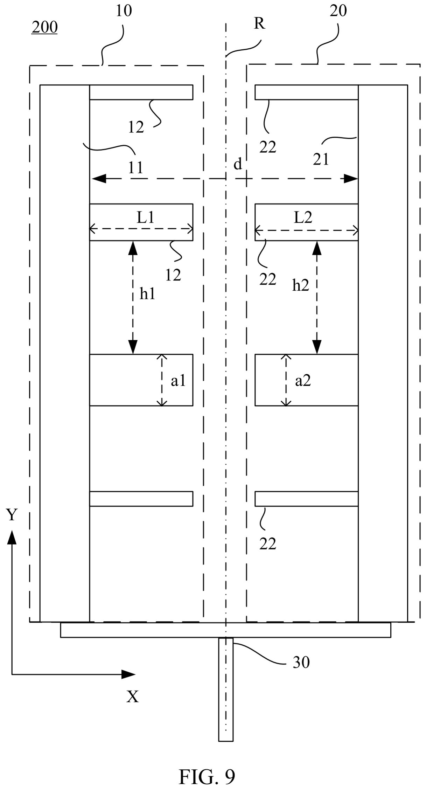

It may be understood that, in FIG. 5, the first radiating element 12 and the second radiating element 22 may be disposed either back-to-back by using the first microstrip 11 and the second microstrip 21, or face-to-face. FIG. 9 is a diagram of a structure of a second antenna structure according to an embodiment of this application. A difference between FIG. 9 and FIG. 5 lies in that, a second side of a first microstrip 11 is electrically connected to at least one first radiating element 12, the second side of the first microstrip 11 faces a second microstrip 21 along a first direction, a second side of the second microstrip 21 is electrically connected to at least one second radiating element 22, and the second side of the second microstrip 21 faces the first microstrip 11 along the first direction. Therefore, a first radiating element 12 and a second radiating element 22 may be disposed between the first microstrip 11 and the second microstrip 21 and disposed in correspondence with each other, that is, the first radiating element 12 and the second radiating element 22 are disposed face to face.

It may be understood that, when the first radiating element 12 and the second radiating element 22 are disposed face to face, a spacing between a length of the first radiating element 12 in the first direction and a length of the second radiating element 22 in the first direction is less than a spacing between the first microstrip 11 and the second microstrip 21 in the first direction, to ensure that the first radiating structure 10 and the second radiating structure 20 are disposed side by side and spaced apart along the first direction, implementing reconfigurable beam.

In some possible implementations, the first radiating structure 10 may include at least three first radiating elements 12, and the second radiating structure 20 may include at least three second radiating elements 22. For example, as shown in FIG. 5, there may be four first radiating elements 12 and four second radiating elements 22. Widths (as shown in a1 in FIG. 5) of the at least three first radiating elements 12 follow a rule of first being increased and then being decreased from a first end to a second end of the first microstrip 11. Widths (as shown in a2 in FIG. 5) of the at least three second radiating elements 22 follow a rule of first being increased and then being decreased from a first end to a second end of the second microstrip 21. The width of the first radiating element 12 is a width of the first radiating element 12 in the second direction, and the width of the second radiating element 22 is a width of the second radiating element 22 in the second direction.

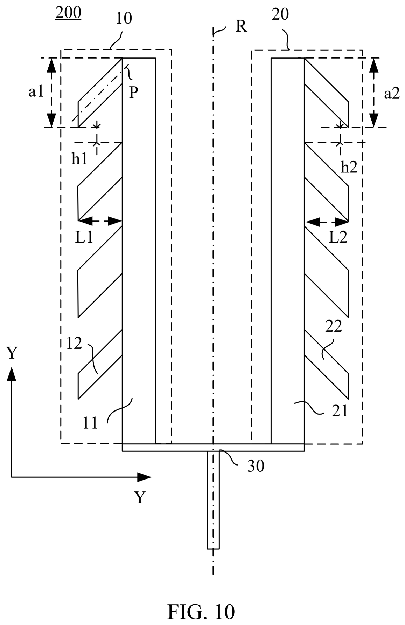

The width of the first radiating element 12 in the second direction may be understood as a distance (for example, a1 in FIG. 5 or a1 in FIG. 10) between two points that are of the first radiating element 12 and that are farthest from each other in the second direction. FIG. 10 is a diagram of a structure of a third antenna structure according to an embodiment of this application. Similarly, the width (for example, a2 in FIG. 5 or a2 in FIG. 10) of the second radiating element 22 in the second direction may also be correspondingly understood. The length (for example, L1 in FIG. 5 or L1 in FIG. 10) of the first radiating element 12 in the first direction and the length (for example, L2 in FIG. 5 or L2 in FIG. 10) of the second radiating element 22 in the first direction may also be correspondingly understood.

It may be understood that, because the first radiating structure 10 and the second radiating structure 20 are mirror-symmetric, widths of the first radiating element 12 and the second radiating element 22 that correspond to each other in the first direction are the same.

Certainly, the width of the first radiating element 12 and the width of the second radiating element 22 need to follow the rule of first being increased and then being decreased. In some possible implementations, the first radiating structure 10 may include at least two first radiating elements 12, and the second radiating structure 20 includes at least two second radiating elements 22 (for example, as shown in FIG. 5, there are four first radiating elements 12 and four second radiating elements 22). Each first radiating element 12 has a same width in the second direction, and each second radiating element 22 has a same width in the second direction.

In some possible implementations, the first radiating structure 10 may include at least four first radiating elements 12, and the second radiating structure 20 may include at least four second radiating elements 22. Spacings (for example, h1 in FIG. 5) between two adjacent first radiating elements 12 in the second direction follow a rule of first being decreased and then being increased from the first end to the second end of the first microstrip 11. Spacings (for example, h2 in FIG. 5) between two adjacent second radiating elements 22 in the second direction follow a rule of first being decreased and then being increased from the first end to the second end of the second microstrip 21.

A spacing between two adjacent first radiating elements 12 in the second direction may be understood as a spacing (for example, h1 in FIG. 5 or h1 in FIG. 10) between two points that are of the two adjacent first radiating elements 12 and that are closest to each other in the second direction. Similarly, a spacing between two adjacent second radiating elements 22 in the second direction may be understood as a spacing (for example, h2 in FIG. 5 or h2 in FIG. 10) between two points that are of the two adjacent second radiating elements 22 and that are closest to each other in the second direction. As shown in FIG. 6, because both the first radiating element 12 and the second radiating element 22 are rectangular, the spacing between the two adjacent first radiating elements 12 in the second direction may be understood as a spacing between two corresponding points in two sides that are of the two adjacent first radiating elements 12 and that are close to each other in the second direction. Alternatively, as shown in FIG. 10, a spacing between two adjacent first radiating elements 12 in the second direction is shown by h1 in FIG. 10.

Certainly, the spacings between two adjacent first radiating elements 12 in the second direction and the spacings between the two adjacent second radiating elements 22 in the second direction need to follow the rule of first being decreased and then being increased. In some possible implementations, the first radiating structure 10 may include at least three first radiating elements 12, and the second radiating structure 20 may include at least three second radiating elements 22. Spacings between two adjacent first radiating elements 12 are the same in the second direction, and spacings between two adjacent second radiating elements 22 are the same in the second direction. For example, in some possible implementations, there are four first radiating elements 12 and four second radiating elements 22. Spacings between two adjacent first radiating elements 12 are the same in the second direction, spacings between two adjacent second radiating elements 22 are the same in the second direction, and a spacing between two adjacent first radiating elements 12 in the second direction is the same as a spacing between two adjacent second radiating elements 22 in the second direction.

In some possible implementations, a spacing d between the first microstrip 11 and the second microstrip 21 in the first direction may satisfy $1/20\ \lambda \ll d \ll 1/2\ \lambda$, where $\lambda$ is an operating wavelength of the antenna structure 200. The operating wavelength is a wavelength corresponding to a center frequency of a resonance frequency or a center frequency of an operating frequency band supported by the antenna structure 200.

For example, as shown in FIG. 5, the spacing between the first microstrip 11 and the second microstrip 21 in the first direction may be understood as a spacing between the second side of the first microstrip 11 and the second side of the second microstrip 21 in the first direction.

A specific value of the spacing between the first microstrip 11 and the second microstrip 21 in the first direction is not limited herein, which can be adjusted based on actual production or design requirements. It may be understood that the spacing d between the first microstrip 11 and the second microstrip 21 in the first direction may include but is not limited to $1/10\ \lambda$, $2/10\ \lambda$, $3/10\ \lambda$, $7/20\ \lambda$, $9/20\ \lambda$ or the like.

For example, in some embodiments, as shown in FIG. 5, the spacing d between the first microstrip 11 and the second microstrip 21 in the first direction may be equal to $1/10\ \lambda$, so that radiation performance of the antenna structure 200 is good and a radiation aperture is small, which helps miniaturize the antenna structure 200.

In some possible implementations, each first radiating element 12 is a first patch element, and each second radiating element 22 is a second patch element.

In this embodiment of this application, materials of the first patch element and the second patch element are not limited. For example, in some embodiments, both the first patch element and the second patch element may be metal patches. In addition, the first patch element and the second patch element have a same shape, and the first patch element and the second patch element that correspond to each other in the first direction are mirror-symmetric.

As shown in FIG. 5, both the first patch element and the second patch element may be rectangular patches. Certainly, the first patch element and the second patch element may not necessarily be rectangular patches, or may be patches of another shape. For example, the first patch element and the second patch element may alternatively be one of the following patches: a trapezoid patch, a circular patch, an elliptic patch, a parallelogram patch (for example, as shown in FIG. 10), or a triangular patch.

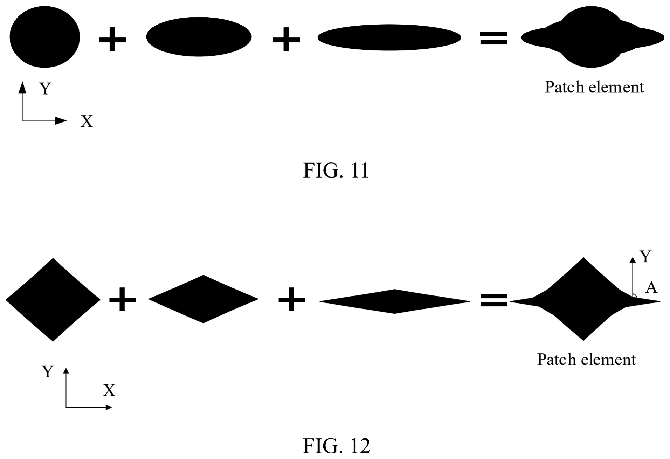

Alternatively, the first patch element and the second patch element may be in irregular shapes. This is not limited in this application. For example, it may be considered that the first patch element and the second patch element each are formed by superimposing a plurality of shapes. As shown in FIG. 11, the first patch element and the second patch element may be in a quasi-circle shape, and edges of the first patch element and the second patch element may include a straight line segment and an arc line. FIG. 11 is a diagram of a first irregular-shaped patch element according to an embodiment of this application. Alternatively, it may be understood that an edge shape of each first patch element or each second patch element is a line segment, an arc line, an irregular zigzag, or an irregular arc line that forms an included angle A with the second direction, where A ranges 0° to 180°, as shown in FIG. 12. FIG. 12 is a diagram of a second irregular-shaped patch element according to an embodiment of this application. This embodiment of this application provides only some examples, and does not limit a specific shape of the first patch element or the second patch element.

In this embodiment of this application, the antenna structure 200 is used in the 77 GHz millimeter wave field for description. However, an operating frequency band of the antenna structure 200 may be adjusted by adjusting sizes of the first patch element and the second patch element. It should be noted that the first patch element and the second patch element that correspond to each other in the first direction have a same size.

In this embodiment of this application, an extension direction (for example, a direction P in FIG. 5) of the first radiating element 12 may be perpendicular to the extension direction (for example, a direction Y in FIG. 5) of the first microstrip 11. Alternatively, an extension direction (for example, a direction P in FIG. 10) of the first radiating elements 12 may intersect and is not perpendicular to the extension direction (for example, a direction Y in FIG. 10) of the first microstrip 11. Because the first radiating structure 10 and the second radiating structure 20 are mirror-symmetric, an extension direction of the second radiating element 22 and the extension direction of the second microstrip 22 may be correspondingly understood.

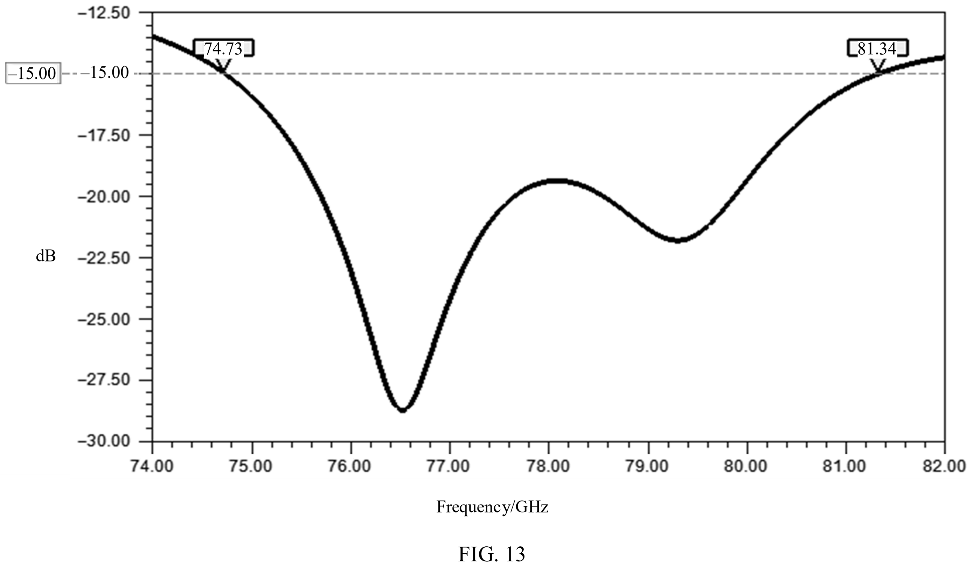

FIG. 13 is a diagram of a return loss of the antenna structure in the embodiment shown in FIG. 5. As shown in FIG. 13, |S11|≤-15 dB is used as an example, a minimum impedance bandwidth of the antenna structure 200 is 75.07 GHz to 81.1 GHz, and the impedance bandwidth meets a requirement.

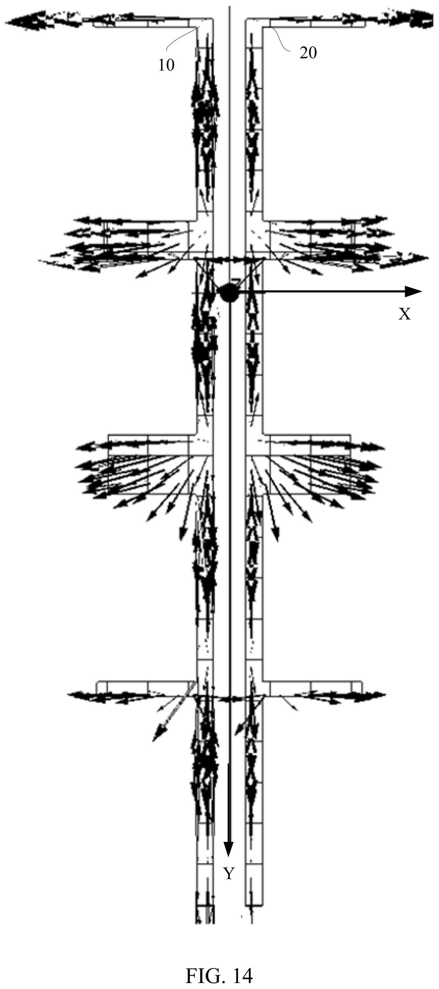

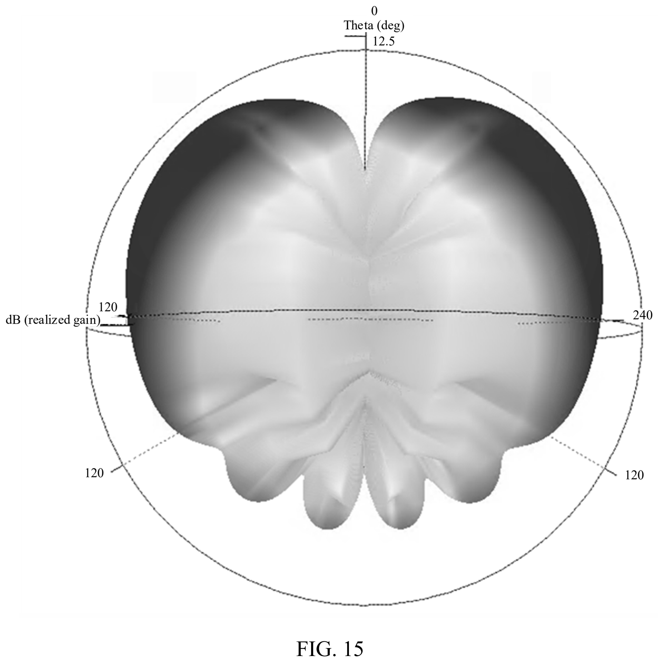

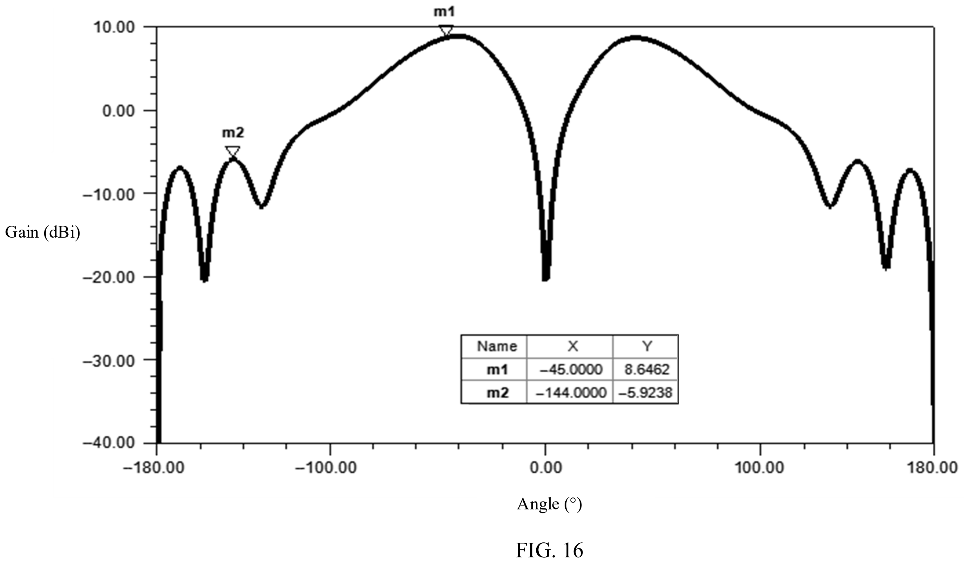

FIG. 14 is a diagram of current distribution of the antenna structure in the embodiment shown in FIG. 5 corresponding to a phase difference of 0°. FIG. 15 is a 3D radiation pattern of the antenna structure in the embodiment shown in FIG. 5 corresponding to a phase difference of 0°. FIG. 16 is a radiation pattern, on a horizontal plane, of the antenna structure in the embodiment shown in FIG. 5 corresponding to a phase difference of 0°. The radiation pattern on the horizontal plane may be understood as a radiation pattern of the antenna structure in a plane formed by the first direction and a third direction that is perpendicular to a plane on which the antenna structure is located.

As shown in FIG. 14, when the phase difference between the currents on the first radiating structure 10 and the second radiating structure 20 is 0°, that is, when a phase of 0°/0° is configured, current distribution on the first radiating structure 10 and the second radiating structure 20 is shown in FIG. 14. Two columns of currents flow along an edge of the first radiating element 12 and an edge of the second radiating element 22 respectively. In this case, the currents on the first radiating structure 10 and the second radiating structure 20 are reversely distributed in an equal amplitude along the first direction in the plane in which the antenna structure 200 is located, that is, the current on the first radiating element 12 is symmetrical to the current on the second radiating element 22 along the second direction. The equal amplitude means that the currents on the first radiating element 12 and the second radiating element 22 have a same magnitude. Therefore, radiation of the antenna structure 200 in a normal direction is zero (as shown in FIG. 15), causing a null depth, thereby forming a double-peak beam in the horizontal plane. In other words, a radiation beam generated by the antenna structure 200 has two radiation directions, and the two radiation directions are respectively on two sides of the normal direction (for example, 0° in FIG. 16). The generated radiation beam is a horizontal double-peak beam, and forms ±45° with the normal direction, as shown in FIG. 16.

As shown in FIG. 15, when the phase difference between the currents of the first radiating structure 10 and the second radiating structure 20 is 0°, the horizontal dual-peak beam generated by the antenna structure 200 may obtain maximum values at ±45°, where the maximum value is 8.6 dBi, and a sidelobe level is -14.5 dBc. In addition, refer to FIG. 15. Because the first radiating structure 10 and the second radiating structure 20 are mirror-symmetric, energy may be concentrated in the normal direction. Further, energy on left and right sides of the normal direction is closer to being equal. In other words, the radiation pattern may be more symmetric.

Therefore, it can be learned from FIG. 15 and FIG. 16 that the horizontal dual-peak beam generated by the antenna structure 200 may cover the scenario 1 and the scenario 2 in FIG. 8, and is used to implement functions such as BSD, LCA, and DOW.

It should be noted that a position of the dual-peak beam is not limited to ±45°, and may alternatively be other angles, for example, ±30° or ±60°. It may be understood that, the position of the dual-peak beam may be changed to another angle by adjusting a value of the phase difference.

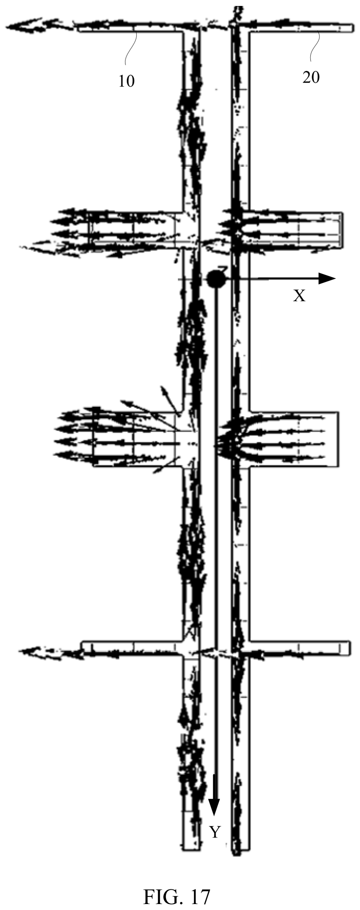

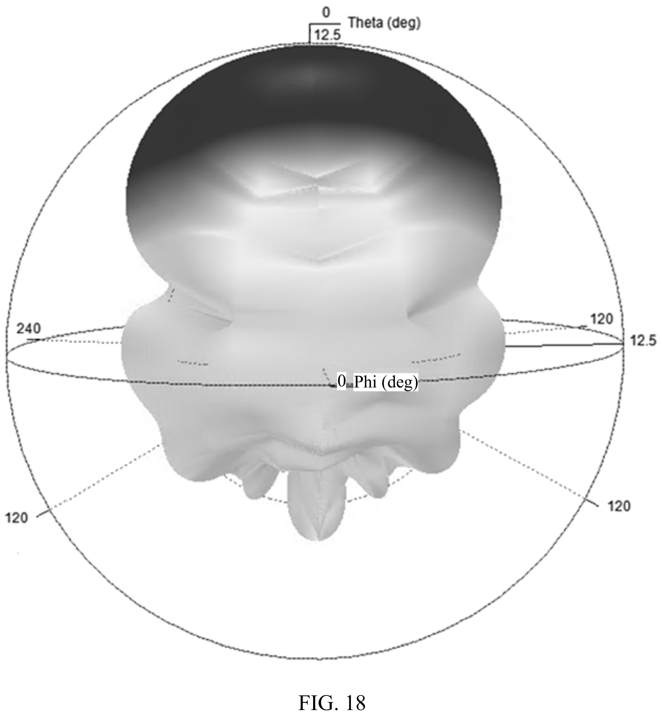

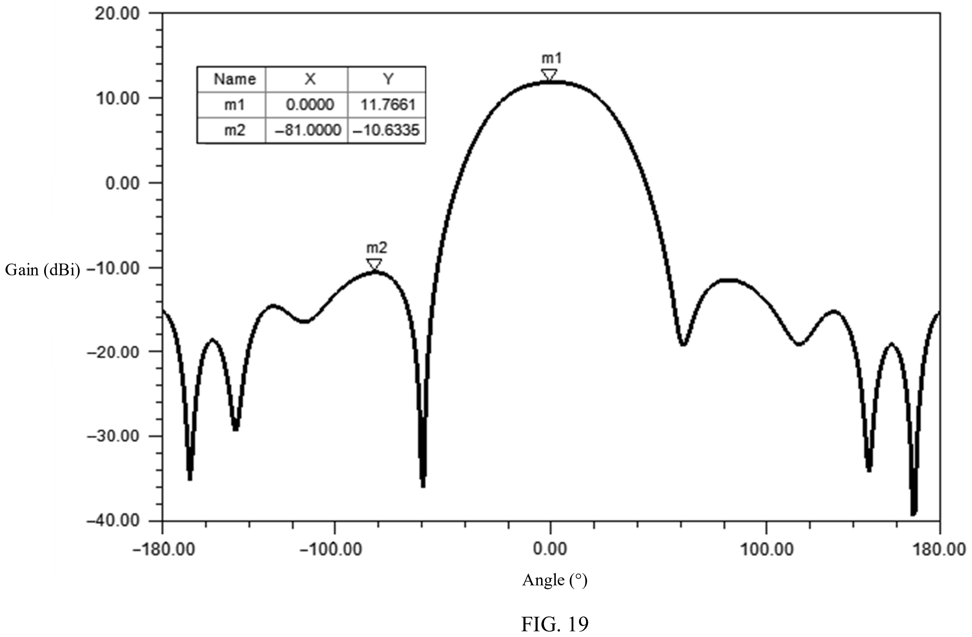

FIG. 17 is a diagram of current distribution of the antenna structure in the embodiment shown in FIG. 5 corresponding to a phase difference of 180°. FIG. 18 is a 3D radiation pattern of the antenna structure in the embodiment shown in FIG. 5 corresponding to a phase difference of 180°. FIG. 19 is a radiation pattern, on a horizontal plane, of the antenna structure in the embodiment shown in FIG. 5 corresponding to a phase difference of 180°.

As shown in FIG. 17, when the phase difference between the currents on the first radiating structure 10 and the second radiating structure 20 is 180°, that is, when a phase of 180°/0° is configured, current distribution on the first radiating structure 10 and the second radiating structure 20 is shown in FIG. 17. Two columns of currents flow along an edge of the first radiating element 12 and an edge of the second radiating element 22 respectively. In this case, the currents on the first radiating structure 10 and the second radiating structure 20 are co-directionally distributed in an equal amplitude along the first direction in a plane in which the antenna structure 200 is located. In other words, the current on the first radiating element 12 and the current on the second radiating element 22 are set with equal amplitudes and aligned in a same direction along the first direction. The equal amplitude setting means that the current on the first radiating element 12 and the current on the second radiating element 22 have a same magnitude, and the co-directional setting means that the current on the first radiating element 12 and the current on the second radiating element 22 flow leftward along the first direction. Therefore, the antenna structure 200 obtains a maximum value of radiation in a normal direction (as shown in FIG. 18), to form a single-peak beam in a horizontal plane 0°, that is, in the normal direction (as shown in FIG. 19).

As shown in FIG. 19, when the phase difference between the currents of the first radiating structure 10 and the second radiating structure 20 is 180°, a normal single-peak beam whose maximum value points to the normal direction may be generated, and the normal single-peak beam may be used in the scenario 3 in FIG. 8. In addition, as shown in FIG. 19, the maximum value of the normal single-peak beam is obtained at 0°, the maximum value is 11.7 dBi, and a sidelobe level is -22 dBc. In addition, refer to FIG. 19. Because the first radiating structure 10 and the second radiating structure 20 are mirror-symmetric, energy may be concentrated in the normal direction, thereby increasing a detection range.

Therefore, it can be learned from FIG. 18 and FIG. 19 that the normal single beam generated by the antenna structure 200 may cover the scenario 3 in FIG. 8, and is used to implement a function such as PA.

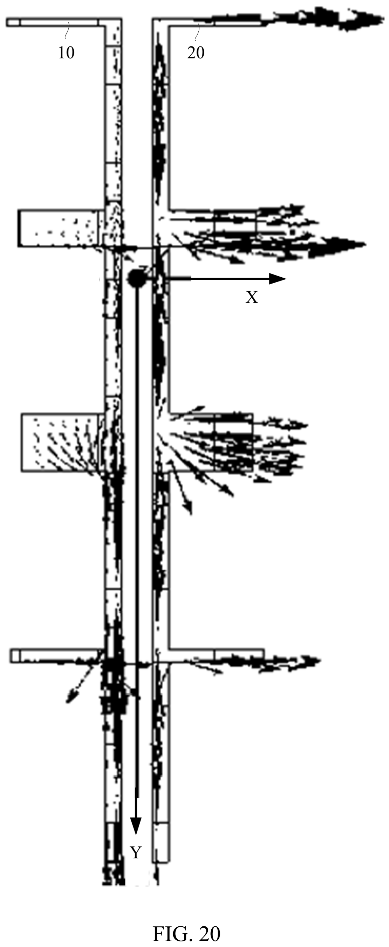

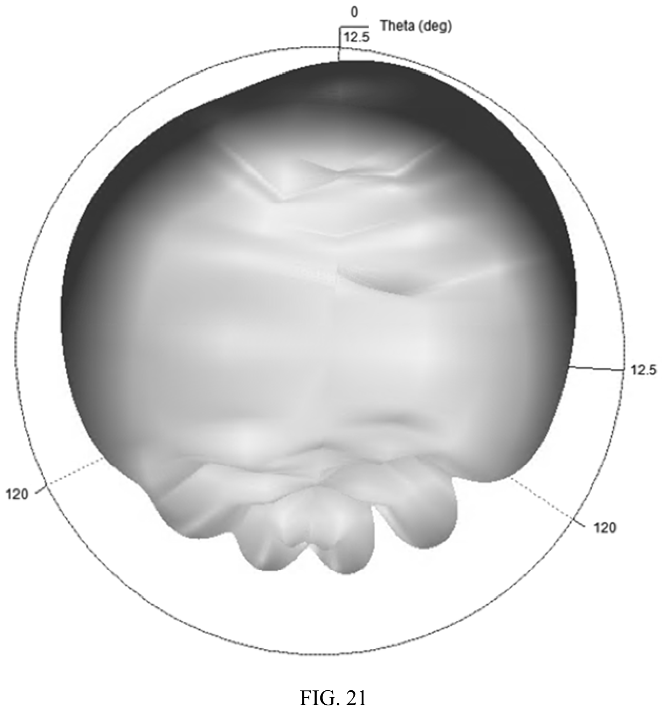

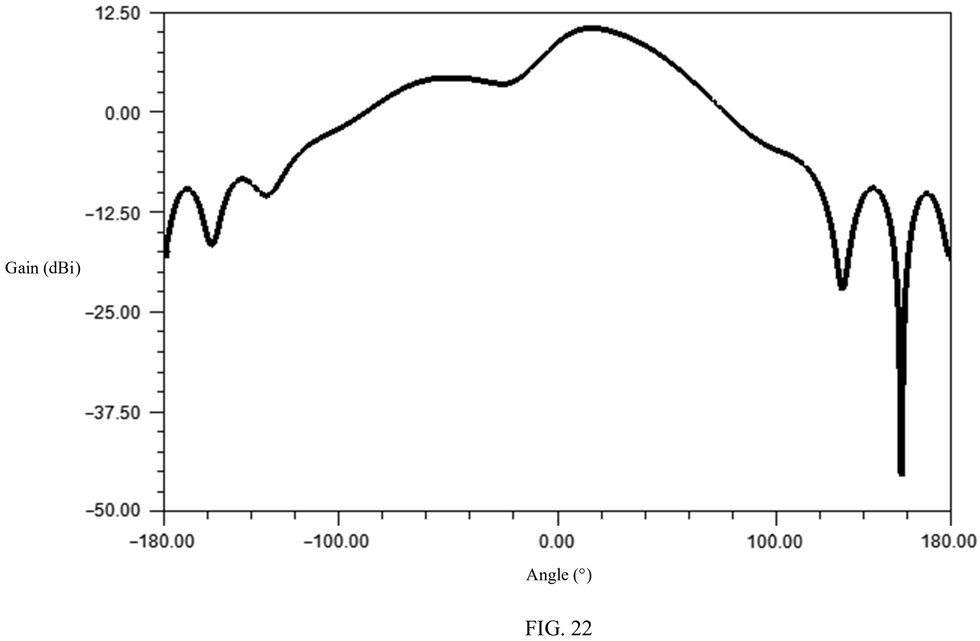

FIG. 20 is a diagram of current distribution of the antenna structure in the embodiment shown in FIG. 5 corresponding to a phase difference of 90°. FIG. 21 is a 3D radiation pattern of the antenna structure in the embodiment shown in FIG. 5 corresponding to a phase difference of 90°. FIG. 22 is a radiation pattern, on a horizontal plane, of the antenna structure in the embodiment shown in FIG. 5 corresponding to a phase difference of 90°.

As shown in FIG. 20, when the phase difference between the currents of the first radiating structure 10 and the second radiating structure 20 is 90°, that is, when a phase of 90°/0° is configured, current distribution between the first radiating structure 10 and the second radiating structure 20 is shown in FIG. 20. Two columns of currents flow along an edge of the first radiating element 12 and an edge of the second radiating element 22 respectively, and amplitudes of the two columns of currents are unequal and phases are orthogonal. In this case, the current on the first radiating element 12 and the current on the second radiating element 22 are set with non-equal amplitudes and aligned in the same direction along the first direction in a plane in which the antenna structure 200 is located. Specifically, a magnitude of the current on the first radiating element 12 is less than a magnitude of the current on the second radiating element 22, and both the current on the first radiating element 12 and the current on the second radiating element 22 flow rightward along the first direction. Therefore, radiation of the antenna structure 200 is maximized at 17°, and a first horizontal single-peak beam (17° single-peak beam) may be formed in the horizontal plane and on a right side of a normal direction.

As shown in FIG. 21, the 17° single-peak beam generated by the antenna structure 200 may cover the scenario 2 in FIG. 8, and may be used to implement a function such as RCTA.

When the phase difference between the currents of the first radiating structure 10 and the second radiating structure 20 is 90°, a single-peak beam whose maximum value points to 17° may be generated, and the single-peak beam is used in the scenario 1 in FIG. 8. Refer to FIG. 22. The maximum value of the 17° single-peak beam is obtained at 17 degrees, the maximum value is 10.4 dBi, and a sidelobe level is -20 dBc.

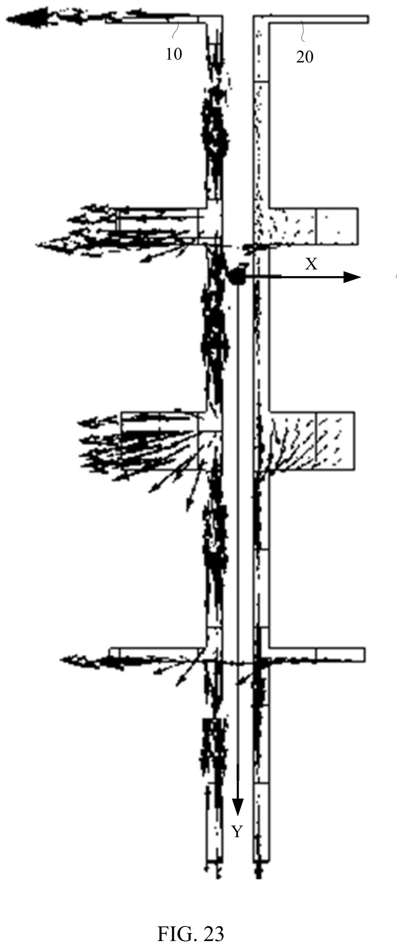

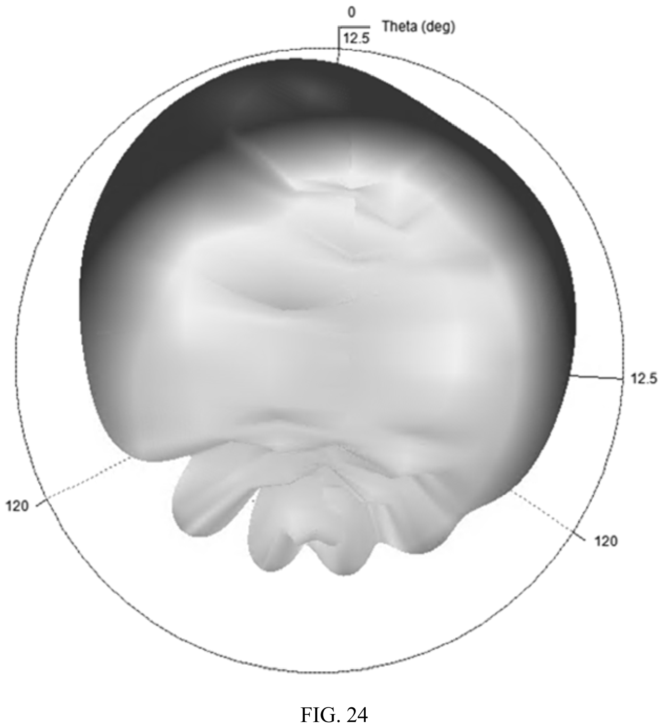

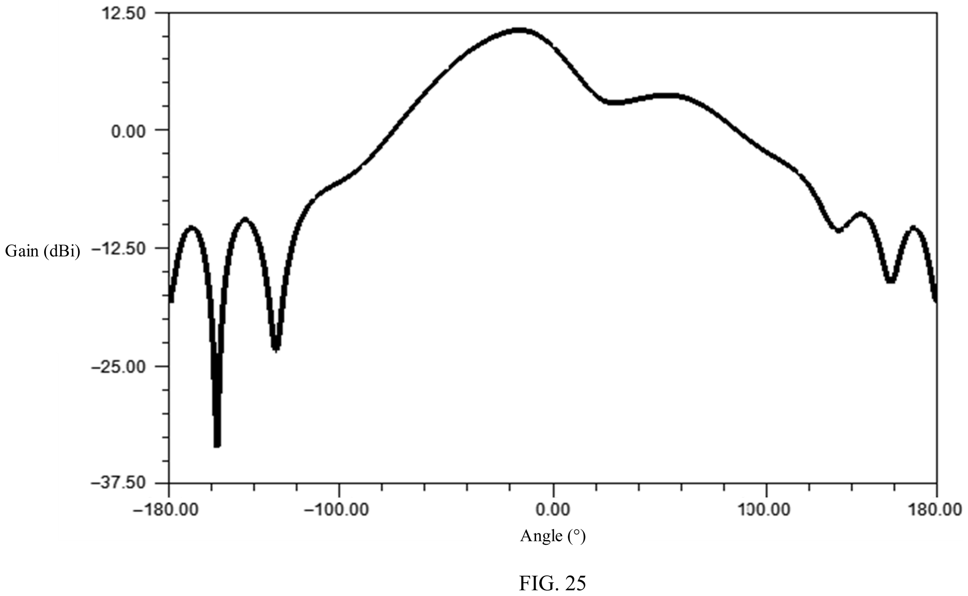

FIG. 23 is a diagram of current distribution of the antenna structure in the embodiment shown in FIG. 5 corresponding to a phase difference of 270°. FIG. 24 is a 3D radiation pattern of the antenna structure in the embodiment shown in FIG. 5 corresponding to a phase difference of 270°. FIG. 25 is a radiation pattern, on a horizontal plane, of the antenna structure in the embodiment shown in FIG. 5 corresponding to a phase difference of 270°.

As shown in FIG. 23, when the phase difference between the currents of the first radiating structure 10 and the second radiating structure 20 is 90°, that is, when a phase of 270°/0° is configured, current distribution between the first radiating structure 10 and the second radiating structure 20 is shown in FIG. 23. Two columns of currents flow along an edge of the first radiating element 12 and an edge of the second radiating element 22 respectively, and amplitudes of the two columns of currents are unequal and phases are orthogonal. In this case, the current on the first radiating element 12 and the current on the second radiating element 22 are set with non-equal amplitudes and aligned in the same direction along the first direction in a plane in which the antenna structure 200 is located. Specifically, a magnitude of the current on the first radiating element 12 is less than a magnitude of the current on the second radiating element 22, and both the current on the first radiating element 12 and the current on the second radiating element 22 flow leftward along the first direction. Therefore, radiation of the antenna structure 200 is maximized at -17°, and a second horizontal single-peak beam (-17° single-peak beam) may be formed in the horizontal plane and on a left side of a normal direction.

As shown in FIG. 24, the -17° single-peak beam generated by the antenna structure 200 may cover the scenario 1 in FIG. 8, and may be used to implement a function such as RCTA.

When the phase difference between the currents of the first radiating structure 10 and the second radiating structure 20 is 270°, a single-peak beam whose maximum value points to -17° may be generated, and the single-peak beam is used in the scenario 1 in FIG. 8. Refer to FIG. 25. The maximum value of the 17° single-peak beam is obtained at -17 degrees, the maximum value is 10.5 dBi, and a sidelobe level is -20 dBc.

An embodiment of this application further provides an electronic device. The electronic device may include the antenna structure 200 described above.

In some embodiments, the electronic device may further include a circuit board (Printed Circuit Board, PCB), and the antenna structure 200 may be disposed on a surface of the circuit board, so as to form a PCB antenna. It may be understood that the circuit board may use a Rogers (Rogers) dielectric board, or may use a hybrid dielectric board of Rogers and FR-4, or the like. A common PCB antenna has advantages of low cost, easy processing, and easy integration.

In this embodiment of this application, the electronic device may include but is not limited to a device such as a detection apparatus or a radar.

An embodiment of this application further provides a terminal. The terminal may include the electronic device described above, and the electronic device is a radar.

The terminal in this embodiment of this application may include but is not limited to an intelligent transportation device (a vehicle 100 or an unmanned aerial vehicle), a smart home device, a smart manufacturing device, a surveying and mapping device, a robot, or the like. The intelligent transportation device may be, for example, an automated guided vehicle (automated guided vehicle, AGV) or an unmanned transportation vehicle. The terminal may be a mobile phone (mobile phone), a tablet computer (Pad), a computer with a wireless transceiver function, a virtual reality (virtual reality, VR) terminal, an augmented reality (augmented reality, AR) terminal, a terminal in industrial control (industrial control), a terminal in self driving (self driving), a terminal in telemedicine (remote medical), a terminal in a smart grid (smart grid), a terminal in transportation safety (transportation safety), a terminal in a smart city (smart city), a terminal in a smart home (smart home), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. An antenna structure, comprising a first radiating structure and a second radiating structure that are connected to a same feeder line, wherein

    the first radiating structure and the second radiating structure are mirror-symmetric;
    the first radiating structure comprises a first microstrip and at least one first radiating element, and the second radiating structure comprises a second microstrip and at least one second radiating element;
    the at least one first radiating element is arranged along an extension direction of the first microstrip; and
    the at least one second radiating element is arranged along an extension direction of the second microstrip.

2. The antenna structure according to claim 1, wherein the first microstrip and the second microstrip are disposed side by side and spaced apart along a first direction, and the extension direction of the first microstrip and the extension direction of the second microstrip are perpendicular to the first direction;

    a first side of the first microstrip is electrically connected to the at least one first radiating element, and the first side of the first microstrip faces away from the second microstrip along the first direction; and
    a first side of the second microstrip is electrically connected to the at least one second radiating element, and the first side of the second microstrip faces away from the first microstrip along the first direction.

3. The antenna structure according to claim 1, wherein the first microstrip and the second microstrip are disposed side by side and spaced apart along a first direction, and the extension direction of the first microstrip and the extension direction of the second microstrip are perpendicular to the first direction;

    a second side of the first microstrip is electrically connected to the at least one first radiating element, and the second side of the first microstrip faces the second microstrip along the first direction; and

a second side of the second microstrip is electrically connected to the at least one second radiating element, and the second side of the second microstrip faces the first microstrip along the first direction.

4. The antenna structure according to any one of claims 1 to 3, wherein when a phase difference between a current of the first radiating structure and a current of the second radiating structure is 0°, the antenna structure radiates a horizontal double-peak beam; or when a phase difference between a current of the first radiating structure and a current of the second radiating structure is N°, the antenna structure radiates a horizontal single-peak beam, wherein N is a positive integer.

5. The antenna structure according to claim 4, wherein a current on the at least one first radiating element and a current on the at least one second radiating element are symmetrical along a second direction; or

a current on the at least one first radiating element and a current on the at least one second radiating element are set with equal amplitudes and aligned in a same direction along the first direction; or

a current on the at least one first radiating element and a current on the at least one second radiating element are set with non-equal amplitudes and aligned in the same direction along the first direction.

6. The antenna structure according to any one of claims 1 to 5, wherein the first radiating structure comprises at least three first radiating elements, and the second radiating structure comprises at least three second radiating elements;

widths of the at least three first radiating elements follow a rule of first being increased and then being decreased from a first end to a second end of the first microstrip, wherein the width of the first radiating element is a width of the first radiating element in the second direction, and the second direction is parallel to the extension direction of the first microstrip; and

widths of the at least three second radiating elements follow a rule of first being increased and then being decreased from a first end to a second end of the second microstrip, wherein the width of the second radiating element is a width of the second radiating element in the second direction, and the second direction is parallel to the extension direction of the second microstrip.

7. The antenna structure according to any one of claims 1 to 5, wherein the first radiating structure comprises at least two first radiating elements, and the second radiating structure comprises at least two second radiating elements;

each first radiating element has a same width in the second direction, and each second radiating element has a same width in the second direction.

8. The antenna structure according to any one of claims 1 to 7, wherein the first radiating structure comprises at least four first radiating elements, and the second radiating structure comprises at least four second radiating elements;

spacings between two adjacent first radiating elements in the second direction follow a rule of first being decreased and then being increased from the first end to the second end of the first microstrip; and

spacings between two adjacent second radiating elements in the second direction follow a rule of first being decreased and then being increased from the first end to the second end of the second microstrip.

9. The antenna structure according to any one of claims 1 to 7, wherein the first radiating structure comprises at least three first radiating elements, and the second radiating structure comprises at least three second radiating elements; and

spacings between two adjacent first radiating elements are the same in the second direction, and spacings between two adjacent second radiating elements are the same in the second direction.

10. The antenna structure according to any one of claims 1 to 9, wherein a spacing d between the first microstrip and the second microstrip in the first direction satisfies: $\frac{1}{20}\lambda \ll d \ll 1/2\,\lambda$, wherein $\lambda$ is an

operating wavelength of the antenna structure.

11. The antenna structure according to claim 10, wherein the spacing d between the first microstrip and the second microstrip in the first direction is equal to 1/10 X.

12. The antenna structure according to any one of claims 1 to 11, wherein each first radiating element is a first patch element, and each second radiating element is a second patch element.

13. The antenna structure according to claim 12, wherein the first patch element and the second patch element are one of the following patches: a rectangular patch, a trapezoidal patch, a circular patch, an elliptical patch, a parallelogram patch, or a triangular patch.

**14.** The antenna structure according to any one of claims 1 to 13, wherein there are four first radiating elements and four second radiating elements.

**15.** The antenna structure according to any one of claims 1 to 14, wherein the first radiating structure and the second radiating structure are mirror-symmetric with respect to a symmetry axis parallel to the second direction, and the second direction is parallel to the extension direction of the first microstrip and the extension direction of the second microstrip.

**16.** An electronic device, wherein the electronic device comprises the antenna structure according to any one of claims 1 to 15.

**17.** The electronic device according to claim 16, wherein the electronic device is a radar.

**18.** A terminal, wherein the terminal comprises the electronic device according to claim 16 or 17.

**19.** The terminal according to claim 18, wherein the terminal is a vehicle.

Behind a
vehicle body

MRR

SRR

SRR

SRR

SRR

SRR

SRR

Ahead the
vehicle body

MRR

LRR

100

FIG. 1

Ahead a
vehicle body

Behind the
vehicle body

Direction 1

Direction 2

Direction 3
(normal direction)

FIG. 2

Corner millimeter-
wave radar

Normal millimeter-
wave radar

Corner millimeter-
wave radar

FIG. 3

(a)

Power
splitter

(b)

FIG. 4

FIG. 5

FIG. 6

FIG. 7

Dual-peak beam                Normal single-peak beam

Scenario 1/ Scenario 2            Scenario 3

FIG. 8

**FIG. 9**

FIG. 10

FIG. 11

FIG. 12

FIG. 13

EP 4 679 628 A1

FIG. 14

FIG. 15

FIG. 16

EP 4 679 628 A1

FIG. 17

FIG. 18

FIG. 19

EP 4 679 628 A1

FIG. 20

FIG. 21

FIG. 22

EP 4 679 628 A1

FIG. 23

FIG. 24

FIG. 25

EP 4 679 628 A1

## INTERNATIONAL SEARCH REPORT

| International application No. |
| --- |
| **PCT/CN2023/084517** |

**A.      CLASSIFICATION OF SUBJECT MATTER**

H01Q1/38(2006.01)i

According to International Patent Classification (IPC) or to both national classification and IPC

**B.      FIELDS SEARCHED**

Minimum documentation searched (classification system followed by classification symbols)

IPC: H01Q

Documentation searched other than minimum documentation to the extent that such documents are included in the fields searched

Electronic data base consulted during the international search (name of data base and, where practicable, search terms used)

CNTXT; ENTXT; WPABS; DWPI; VEN; VCN; CNKI; IEEE: 馈线, 镜像, 对称, 微带线, 第一, 第二; feed, line, mirror, symmetry, microstrip, first, second

**C.      DOCUMENTS CONSIDERED TO BE RELEVANT**

| Category* | Citation of document, with indication, where appropriate, of the relevant passages | Relevant to claim No. |
| --- | --- | --- |
| X | CN 114512826 A (SHENZHEN DAOTONG INTELLIGENT AUTOMOBILE CO., LTD.) 17 May 2022 (2022-05-17) description, paragraphs 40-55, and figures 1-4 | 1-3, 6-19 |
| Y | CN 114512826 A (SHENZHEN DAOTONG INTELLIGENT AUTOMOBILE CO., LTD.) 17 May 2022 (2022-05-17) description, paragraphs 40-55, and figures 1-4 | 4, 5 |
| Y | CN 212783787 U (ZONGMU TECHNOLOGY (SHANGHAI) CO., LTD.) 23 March 2021 (2021-03-23) description, paragraph 160, and figures 1-9 | 4, 5 |
| X | CN 115149249 A (GUANGDONG DAWAN DISTRICT KONGTIAN INFORMATION RESEARCH INSTITUTE) 04 October 2022 (2022-10-04) description, paragraphs 34-38, and figure 8 | 1, 16, 18 |
| Y | US 2010238067 A1 (DENSO CORP.) 23 September 2010 (2010-09-23) description, paragraphs 75-92, and figures 6A-8A | 4, 5 |

☑ Further documents are listed in the continuation of Box C.      ☑ See patent family annex.

| | |
| --- | --- |
| *          Special categories of cited documents: | "T"      later document published after the international filing date or priority date and not in conflict with the application but cited to understand the principle or theory underlying the invention |
| "A"      document defining the general state of the art which is not considered to be of particular relevance | |
| "D"      document cited by the applicant in the international application | "X"      document of particular relevance; the claimed invention cannot be considered novel or cannot be considered to involve an inventive step when the document is taken alone |
| "E"      earlier application or patent but published on or after the international filing date | |
| "L"      document which may throw doubts on priority claim(s) or which is cited to establish the publication date of another citation or other special reason (as specified) | "Y"      document of particular relevance; the claimed invention cannot be considered to involve an inventive step when the document is combined with one or more other such documents, such combination being obvious to a person skilled in the art |
| "O"      document referring to an oral disclosure, use, exhibition or other means | "&"      document member of the same patent family |
| "P"      document published prior to the international filing date but later than the priority date claimed | |

| Date of the actual completion of the international search | Date of mailing of the international search report |
| --- | --- |
| **19 September 2023** | **19 September 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**EP 4 679 628 A1**

**INTERNATIONAL SEARCH REPORT**

International application No.

**PCT/CN2023/084517**

### C.     DOCUMENTS CONSIDERED TO BE RELEVANT

| Category* | Citation of document, with indication, where appropriate, of the relevant passages | Relevant to claim No. |
|---|---|---|
| A | CN 111834742 A (HUIZHOU DESAY SV INTELLIGENT TRANSPORTATION TECHNOLOGICAL INSTITUTE CO., LTD.) 27 October 2020 (2020-10-27) entire document | 1-19 |
| A | CN 114391201 A (HUAWEI TECHNOLOGIES CO., LTD.) 22 April 2022 (2022-04-22) entire document | 1-19 |

Form PCT/ISA/210 (second sheet) (July 2022)

41

## INTERNATIONAL SEARCH REPORT
### Information on patent family members

International application No.

**PCT/CN2023/084517**

| Patent document cited in search report | | | Publication date (day/month/year) | Patent family member(s) | | | Publication date (day/month/year) |
|---|---|---|---|---|---|---|---|
| CN | 114512826 | A | 17 May 2022 | None | | | |
| CN | 212783787 | U | 23 March 2021 | None | | | |
| CN | 115149249 | A | 04 October 2022 | None | | | |
| US | 2010238067 | A1 | 23 September 2010 | JP | 2010220008 | A | 30 September 2010 |
| | | | | JP | 4858559 | B2 | 18 January 2012 |
| | | | | US | 8471775 | B2 | 25 June 2013 |
| | | | | DE | 102010002910 | A1 | 23 September 2010 |
| CN | 111834742 | A | 27 October 2020 | None | | | |
| CN | 114391201 | A | 22 April 2022 | None | | | |

Form PCT/ISA/210 (patent family annex) (July 2022)